(19) Europäisches Patentamt
European Patent Office
Office européen des brevets

(11) **EP 4 650 997 A1**

(12) **EUROPEAN PATENT APPLICATION**

(43) Date of publication:
**19.11.2025 Bulletin 2025/47**

(21) Application number: **24305741.1**

(22) Date of filing: **13.05.2024**

(51) International Patent Classification (IPC):
**G06F 21/44** $^{(2013.01)}$    **H04L 9/00** $^{(2022.01)}$

(52) Cooperative Patent Classification (CPC):
**H04L 9/008; G06F 21/44; G06F 21/51; H04L 9/3236; H04L 9/3271**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **GARBA, Peter**
  **098647 SINGAPORE (SG)**

• **YAP, Swee Swee**
  **731686 SINGAPORE (SG)**
• **LIANG, Xiao Hui**
  **759159 SINGAPORE (SG)**
• **CHEN, Jingbo**
  **570286 SINGAPORE (SG)**
• **ANG, Kok Chai**
  **81300 MALAYSIA (MY)**

(74) Representative: **Bricks, Amélie**
**Thales Dis France SAS**
**Intellectual Property Department**
**6, rue de la Verrerie**
**92190 Meudon (FR)**

(54) **AUTHENTICATION OF A SHARED LIBRARY USING AN ENCRYPTION FUNCTION**

(57) The invention provides a method of authentication between a computer program comprising code instructions with a link to call for a function of a shared library and the shared library implemented in an entity. The method comprises applying (306), by the entity, an encryption function to a predetermined value set N, wherein the encryption function is homomorphic for at least a first operation, and applying (306; 307), by the entity, the first operation to at least one encrypted element of the encrypted value set and to at least one shared value to obtain an authentication key D. Upon reception of (308) the authentication key D, the compute performs (315-318) authentication of the shared library, by the computer, based on the authentication key D and a communication channel is established (319) between the computer program and the shared library to execute the function called by the link in the computer program, only if the authentication of the shared library is valid.

[Fig.3]

EP 4 650 997 A1

**Description**

This invention is related to the field of computer science, and more particularly, to computer programs interfaced with shared resources such as a shared library, to make use of one or several functions implemented in the shared library.

A library is a collection of resources or components, which can be loaded during the execution of the code instructions of a computer program. This allows the computer program not to include any of the resources of the collection in the program itself, and allows the resources to be shared between a plurality of independent computer programs.

A library may include a large variety of resources such as configuration data, documentation data, source code, etc. In what follows, the resources or components made accessible by a library are called "functions".

According to dynamic link libraries, DLL, a computer program includes a link to invoke (or call) the function of a library, and the library function is not loaded in the main memory of a computer executing the computer program until runtime, which saves memory compared to static libraries.

However, when a computer program is depending on a shared library, an attacker can replace or tamper the shared library, as there is no solution to authenticate and check the integrity of the library during execution of the computer program. The attacker can also emulate or simplify the values returned to the computer program in response to a library call during runtime of the computer program.

This leads to deterioration of the security associated to the execution of the computer program.

It is therefore requested to avoid replacement and/or tampering of a shared library and to build a secure communication channel between the library and the computer program upon calling of a library function.

There is therefore a need to authenticate a shared library when one of its function is called by a computer program, to establish a secure communication channel between the shared library and the computer program. It is also preferable to check the integrity of the shared library.

The invention aims at improving the situation.

A first aspect of the invention concerns a method of authentication between a computer program executed on a computer and a shared library implemented in an entity, the computer program comprising code instructions with a link to call for at least one function of the shared library, wherein the method comprises the following steps:

- applying, by the entity, an encryption function to a predetermined value set N, comprising at least one element N[i], i being an index varying between 1 and n, n being an integer equal to or greater than 1, wherein the encryption function is homomorphic for at least one operation, including a first operation;

- applying, by the entity, the first operation to at least one encrypted element of the encrypted value set and to at least one shared value to obtain an authentication key D, wherein the at least one shared value can be accessed to by the computer;
- receiving the authentication key D by the computer;
- performing authentication of the shared library, by the computer, based on the authentication key D;
- establishing a communication channel between the computer program and the shared library to execute the function called by the link in the computer program, only if the authentication of the shared library is valid.

Therefore, the invention allows to authenticate the shared library before a communication channel is established for calling a function of the shared library, the authentication being performed during runtime of the computer program. The use of at least one operation that is homomorphic to the encryption function, by the shared library, allows the shared library to apply the at least one operation to encrypted data, which enables to obfuscate the authentication key D that is transmitted to the computer program for authentication, which makes it harder for an attacker to access to the predetermined value set N that is necessary to authenticate as the valid shared library.

According to some embodiments, the method may further comprise obtaining the at least one shared value by the computer, and performing the authentication of the shared library based on the authentication key D may comprise:

- applying one of the at least one operation to at least a part of the authentication key D and to the at least one shared value to obtain a set of intermediate encrypted elements;
- decrypting the set of intermediate encrypted elements to obtain a set of decrypted values;
- comparing the set of decrypted values with the predetermined value set to authenticate the shared library. The authentication of the shared library may be valid if the set of decrypted values is identical with the predetermined value set.

The one of the at least one operation is advantageously the inverse operation of the first operation applied by the shared library. For example, when the first operation is a multiplication, the inverse operation is the division. When the first operation is a bit rotation to the left, the inverse operation is a bit rotation to the right. As explained below, an advantageous embodiment makes use of the XOR operation, for which the inverse operation is also the XOR operation.

According to some embodiments, the encryption function may be based on a public key associated with the computer and made accessible to the entity, the computer further comprising a secret key for decrypting data encrypted with the public key.

Therefore, the shared library can encrypt the authentication key using public data, and only the computer program is able to authenticate the shared library using the secret key, which enables to establish a secure communication channel between the computer program and the shared library.

According to some embodiments, the encryption function may be a Goldwasser-Micali encryption function and the first operation may be the XOR operation.

This embodiments is very advantageous because the Goldwasser-Micali encryption function is homomorphic for the XOR operation. An interesting property of GM encryption function, is that XORing an encrypted value with the value 0 enables to change the encrypted value, without changing the decrypted value when applying the GM encryption function. Therefore, when an encrypted value is XORed twice with the same given value (which is equivalent to a single XOR operation with 0), the encrypted value is changed without affecting the decrypted value.

According to some embodiments, the method may further comprise:

- generating a random value RV1 by the computer and encrypting the random value RV1 to obtain an encrypted random value R1;
- transmitting the encrypted random value R1 from the computer to the entity; wherein the at least one shared value comprises a first shared value derived from the encrypted random value R1.

Therefore, the authentication key D is uniquely generated for each authentication, which reinforces the security associated with the authentication and prevents an attacker to replace the shared library with a corrupted shared library using the same authentication key.

In complement, the entity may determine an encrypted integrity hash, the encrypted integrity hash may be obtained by applying the encryption function to a hash of the shared library, the at least one shared value may comprise a second shared value and the second shared value may be the encrypted integrity hash.

This enables to check the integrity of the shared library during the authentication process.

According to some embodiments, the authentication key may comprise n encrypted elements D[1..n] derived from the encrypted value set and a first element D[0], the first element D[0] may be determined by the entity based on an encrypted integrity hash, the encrypted integrity hash may be obtained by applying the encryption function to a hash of the shared library. The method may further comprise checking integrity of the shared library by the computer, based on the first element D[0], and the computer may perform authentication of the shared library only if the integrity of the shared library is validly checked.

This enables to perform an integrity check before authentication of the shared library. The authentication is performed only if the shared library is validly checked, which enables to spare computer resources, as authentication is not performed for corrupted shared libraries.

In complement, the first element D[0] may be determined by the entity:

- by applying the first operation to an encrypted random value R1 received from the computer and to the encrypted integrity hash, to obtain an encrypted value T;
- by assigning the encrypted value T to the first element D[0].

Therefore, the encrypted value T that is used for integrity check is uniquely generated before each authentication, which reinforces the security associated with the authentication process.

Still in complement, the entity may apply a bit rotation by a predetermined value to the encrypted value T before assigning the encrypted value T to the first element D[0], and the computer may apply the inverse bit rotation to the first element D[0] upon reception of the authentication key D.

This enables to obfuscate the data transmitted in D, which makes it harder for an attacker to identify the logic of the authentication process.

Still in complement, the predetermined value may be a protocol version V of the shared library.

Therefore, the bit rotation may be applied based on a predetermined value that is known by both the computer and the entity; which enables to obfuscate the data transmitted in D, without increasing the complexity of the authentication process.

According to some embodiments, the method may further comprise the following preliminary steps:

- transmitting, from the computer to the entity, an encrypted initialization random value Init_R1 obtained by applying the encryption function to an initialization random value;
- applying, by the entity, the encryption function to a protocol version V of the shared library, to obtain an encrypted protocol version V';
- applying the first operation to the encrypted protocol version V' and to the encrypted initialization random value Init_R1, to obtain another encrypted initialization random value Init_R2;
- transmitting the other encrypted initialization random value Init_R2 to the computer;
- checking the protocol version of the shared library by the computer based on the received other encrypted initialization random value Init_R2.

The computer may perform authentication of the shared library only if the protocol version of the shared library is validly checked, and the entity may apply the encryption function to the predetermined value set N after reception of an authentication request.

This enables to preliminary check the protocol version of the shared library. The authentication is performed only if the protocol version is valid, which enables to spare computer resources.

In complement, checking of the protocol version of the shared library by the computer may comprise:

- applying one of the at least one operation to the other encrypted initialization random value Init_R2 and to the encrypted initialization random value Init_R1 to obtain the encrypted protocol version V';
- decrypting the encrypted protocol version V' to obtain the protocol version V;
- checking that the protocol version V is a valid protocol version.

The one of the at least one operation is the inverse operation of the first operation, which enables to use the properties of the encryption function to check the protocol version of the shared library.

A second aspect of the invention concerns an authentication system comprising a computer configured to execute a computer program, and an entity implementing a shared library implemented, the computer program comprising code instructions with a link to call for at least one function of the shared library, wherein the entity is configured for:

- applying an encryption function to a predetermined value set N, comprising at least one element N[i], i being an index varying between 1 and n, n being an integer equal to or greater than 1, wherein the encryption function is homomorphic for at least one operation, including a first operation;
- applying the first operation to at least one encrypted element of the encrypted value set and to at least one shared value to obtain an authentication key D, wherein the at least one shared value can be accessed to by the computer.

The computer comprises an interface configured for receiving the authentication key D by the computer, and a processor configured for:

- performing authentication of the shared library based on the authentication key D;
- establishing a communication channel between the computer program and the shared library to execute the function called by the link in the computer program, only if the authentication of the shared library is valid.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

Brief description of the drawings:

[Fig. 1] shows an authentication system according to some embodiments of the invention;
[Fig. 2] shows the preliminary protocol version verification steps of a method of authentication between a computer program and a shared library, implemented in the authentication system, according to some embodiments of the invention;
[Fig. 3] shows the steps of a method of authentication between a computer program and a shared library, implemented in the authentication system, according to some embodiments of the invention.

Detailed description

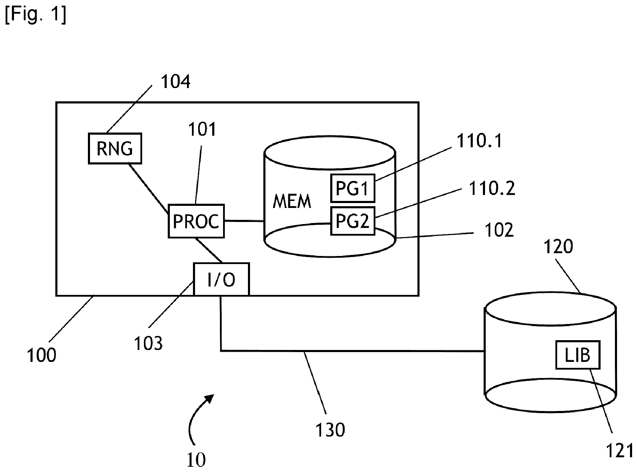

Figure 1 shows an authentication system 10 according to some embodiments of the invention.

The system 10 according to the invention is arranged for performing authentication between a computer program executed on a computer 100 and a library 121 comprising resources in the form of functions that are called by the computer 100 during the execution of the computer program.

The computer 100 comprises a processing unit 101 and a memory 102.

The processing unit 101 may comprise one or multiple microprocessors, a Central Processing Unit (CPU), Graphical Processing Unit (GPU), etc.

No restriction is attached to the memory 102, which may be any non-transient, tangible form of memory. For example, it can comprise ROM, EEPROM and/or flash memory.

According to the invention, the memory 102 stores at least a first computer program 110.1 in the form of code instructions, that can be retrieved by the processing unit 101 to be executed so as to perform a first application associated with the first computer program. The first application may for example consist in a series of at least one action performed during runtime of the first computer program.

The first computer program 110.1 comprises at least some code instructions that are a dynamic link to the library 121, to call for the execution of one of the functions of the library 121.

The library 121 may be stored in an entity 120 that can be accessed by the computer 100 using an interface 103 arranged for communicating with the entity 120 via a communication link 130. The entity 120 can for example be a remote server. Alternatively, the library 121 is stored in the memory 102 of the computer 100: in that case, the entity 120 is a component of the computer 100.

In what follows, it is considered, for illustrative purposes, that the entity 120 is a server.

No restriction is attached to the communication link 130 between the interface 103 and server 120, which may use any wired or wireless communication protocol. For example, wired protocols may include RS-232, RS-422, RS-485, I2C, SPI, IEEE 802.3 and TCP/IP. Wireless protocols may include IEEE 802.11 a/b/g/n, Bluetooth, Bluetooth Low Energy (BLE), FeliCa, Zigbee, GSM, LTE, 3G, 4G, 5G, RFID and NFC. The interface 103 may comprise hardware (an Ethernet port, a wireless radio), software (drivers, firmware application) or a combination thereof to enable communications with the other components of the system 10.

The server 120 may also be a remote server 120, located on a different site than the site in which the computer 100 is located, and accessed by the interface 103 via an IP network.

The computer system 10 may further store a second computer program 110.2 that may comprise second code instructions, including a second dynamic link to call for one of the functions of the library 121. The second computer program 110.2 may be stored in the memory 102 of the computer 100. Alternatively, the second computer program 110.2 may be stored and executed on another computer (not shown on figure 1), that can access to the library 121.

Therefore, the library 121 can advantageously be exploited by different computer programs, that are independent on each other, and that can be executed on one or several computers 100. The library 121 is therefore called a shared library.

In what follows, the authentication method according to the invention is described between the first computer program 110.1 and the library 121, for illustrative purposes, and the first computer program is called "computer program" for the sake of simplification. Similar steps may be implemented for authentication performed between the second computer program 110.2 and the library 121.

According to the invention, the computer 100 is configured to encrypt data by performing an encryption function, which can be based on a public key of a set of asymmetric keys. The private key, which is used for decrypting encrypted data, is stored in the computer 100, for example in the memory 102, such as in a secure section of the memory 102, whereas the public key used for encryption is made accessible to any entity that communicates with the computer 100. Alternatively, the set of asymmetric keys is associated with the first computer program.

According to the invention, the encryption function is homomorphic for at least one operation, such as a logical operation, and an authentication is performed between the first computer program 110.1 and the library 121 based on the encryption function and the at least one operation.

Assuming that f() is the encryption function, f() is homomorphic for operation Op if f(X Op Y)=f(X) Op f(Y).

In what follows, it is considered for illustrative purposes only, that the encryption function is the encryption function of the Goldwasser-Micali cryptographic scheme, described in the reference article "Probabilistic encryption", S. Goldwasser and S. Micali, J. Comput. Syst Sci, vol. 28, N°2, 1984.

According to the GM scheme, a public key comprises two integers x and M, whereas the secret key comprises two prime numbers p and q, which are a factorization of M. Therefore M=p * q. Also, according to the GM scheme, x is a quadratic residue modulo M.

The GM encryption function, named GM_Encrypt() in what follows, is based on the public key (x,M) and consists in:

$$c = y_i^2 x^{m_i} mod M \; ;$$

wherein $m_i$ is a bit of index i of a message m to be encrypted ;

$y_i$ is a random value, generated by a random number generator 104 of the computer 100, from the group of units modula M, or $gcd(y_i, M)=1$ ;
c is the encrypted output of the function GM_Encrypt applied to $m_i$.

Therefore, according to the GM scheme, each bit $m_i$ of a message m is encrypted one after the other.

The GM encryption function is homomorphic for the XOR logical operation. This means that we obtain, for the following input messages 0xA and 0xb11ddc17:

0x2610012654350601 = GM_Encrypt(0xA)
0x3145383f26556260 = GM_Encrypt(0xb11ddc17)
0x367386a2e481060 = GM_XOR(Ox2610012654350601, 0x3145383f26556260)
0x464856420728a40 = GM_XOR(0x367386a2e481060, 0x3145383f26556260)
0xA == GM_Decrypt(0x464856420728a40).

GM_XOR() is a XOR operation applied to two encrypted data having the size of the GM public key.

In the formula above:

GM_Decrypt () is the decryption function of the GM scheme, which is based on the private key (p,q); and GM_XOR(GM_Encrypt(X),GM_Encrypt(Y)) = GM_Encrypt(X) XOR GM_Encrypt(Y).

This allows to perform XOR operations directly on encrypted data, even for entities that do not possess the private key for decrypting the encrypted data.

Also, according to the GM encryption scheme, an encrypted value can be XORed with the encryption of (0), which changes the encrypted value without changing the result after decryption:

GM_XOR(0x464856420728a40, GM_Encrypt(0)) = 0x3826170e391b070e ;
0xA == GM_Decrypt(0x3826170e391b070e)

According to the example above, both encrypted values
0x3826170e391 b070e and 0x464856420728a40 are decrypted to obtain the same output 0xA.

Using the GM encryption scheme makes it hard for an attacker observing the encrypted data exchanged between the computer program 110.1 and the shared library 121 to understand the logic of the authentication process. Also, it prevents an attacker from tampering the random number generator 104 of the computer 100.

Indeed, if tampered, the random number provided by the RNG 104 to encrypt data using GM_Encrypt() will lead to errors, which can be detected by the computer 100.

GM scheme is known to generate a large overhead, because for each bit $m_i$, the resulting output c has the size of the public key.

According to the invention, the GM encryption scheme is used for integrity check and authentication purposes, and is used to encrypt small and non confidential data: the size of the public key is therefore preferably small according to the invention, such as less than 128 bits, for example equal to 64 bits.

Although the use of GM encryption scheme associated with the XOR operation is particularly advantageous for implementing the invention, it also applies to alternative encryption functions and/or operations that are homomorphic to the encryption function. It is also to be noted that XOR operation is its own inverse operation because (X XOR Y) XOR Y = X. This enables the authenticated entity to apply the same operations as the authenticating one. However, the invention also applies to encryption functions that are homomorphic to a pair of inverse operations, such as multiplication and division for example: in that case, the authenticated entity applies a first operation, for which the encrypting function is homomorphic, whereas the authenticating entity applies the inverse operation.

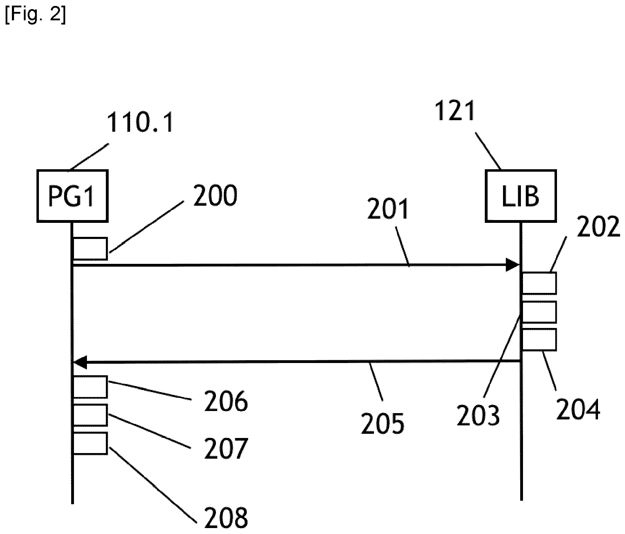

Figure 2 shows the preliminary protocol version verification steps of an authentication method, implemented in the authentication system of figure 1, according to some embodiments of the invention.

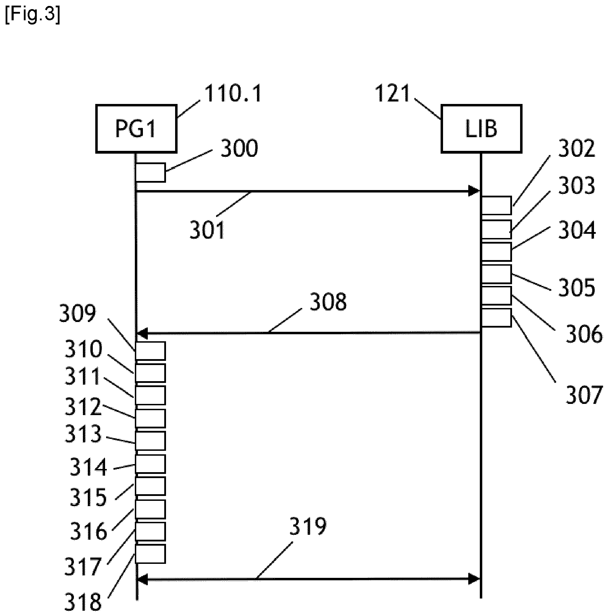

It is to be noted that the following preliminary steps are optional. They however provide the benefits to check the protocol version supported by the library 121, before performing the steps of figure 3 that are described hereafter.

The steps of figure 2 are shown as being performed between the computer program 110.1, executed by the computer 100, and the shared library 121: however, it is to be understood that the physical entities (the computer 100 and the entity 120) executes the steps of the method.

At step 200, the computer 100 generates an initialization random value Init_RV, which is encrypted using the encryption function, to obtain an encrypted initialization random value Init_R1. In what follows, the context of using the GM encryption scheme is described for illustrative purposes. Therefore: Init_R1 = GM_Encrypt (Init_RV).

At step 201, the encrypted initialization random value Init_R1 is transmitted to the shared library 121 (to the entity storing and handling the library 121, which is the server 120 in the embodiment shown on figure 1). In what follows, the shared library 121 is considered as performing some of the steps of the method: these steps are performed by the physical entity 120 storing and handling the shared library 121.

At step 202, the shared library 121 may retrieve the protocol version V supported by the shared library. No restriction is attached to step 202: for example, the protocol version V may be indicated in a file name of the shared library 121, in metadata of the shared library 121, or in a specific section inside the shared library 121.

At step 203, the shared library 121 may encrypt the retrieved protocol version using the GM public key, which is accessible to the shared library 121 (and to any entity). An encrypted protocol version V' is obtained, with V'= GM_Encrypt (V).

At step 204, the shared library applies the XOR operation to the encrypted protocol version V' and to the encrypted initialization random value Init_R1 to obtain another encrypted initialization random value Init_R2, where: Init_R2 = GM_XOR (V', Init_R1).

It is reminded that the example of GM and XOR operation are given for illustrative purposes, as this embodiment is very advantageous for implementing the invention. However, for other encryption functions that are homomorphic for a pair of inverse operations, the shared library 121 makes use of a first operation of the pair, whereas the computer 100 makes use of the inverse operation of the pair, to implement the steps that are described with reference to figures 2 and 3.

At step 205, the other encrypted initialization random value Init_R2 is transmitted by the shared library 121 to the computer program 110.1, and received by the computer program 110.1.

At step 206, the computer program 110.1 applies the XOR operation to the encrypted initialization random value Init_R1 and to the other encrypted initialization random value Init_R2 to obtain the encrypted protocol version V': V' = GM_XOR(Init_R2, Init R1).

At step 207, the computer program 110.1 decrypts the encrypted protocol version V' to obtain the protocol version V, based on the GM secret key that is stored by the computer 100: V=GM_Decrypt(V').

At step 208, the computer program 110.1 checks that the protocol version V is the valid protocol version. The valid protocol version may for example be included in the code instructions of the computer program 110.1. If the protocol version V is the valid protocol version, then the computer program 110.1 may go on with the authentication steps described on Figure 3. Else, if the protocol version V is not the valid protocol version, the computer program 110.1 may be interrupted, returning an error in the protocol version of the shared library 121.

As explained above, the preliminary steps 200 to 208 are optional, and the steps of figure 3 can be performed without the preliminary steps 200 to 208. However, preliminary steps 200 to 208 provide the benefits to preliminary check the protocol version of the shared library before proceeding with the authentication and integrity check of the shared library 121.

Figure 3 shows the steps of a method of authentication between the shared library 121 and the first computer program 110.1, according to some embodiments of the invention.

At step 300, the computer program 110.1 generates an encrypted random value R1 by encrypting a random value RV1 using the GM encryption function. The random value RV1 can be generated by the random number generator 104: R1=GM_Encrypt(RV1).

According to some embodiments of the invention, the computer program 110.1 generates the encrypted random value R1, named first encrypted random value R1, and a second encrypted random value R2 obtained by encrypting another random value RV2 using the GM encryption function. The other random value RV2 can be generated by the random number generator 104: R2=GM_Encrypt(RV2). It is to be noted that the calculation of R2 is optional, as it will be understood from what follows.

At step 301, the first encrypted random value R1, and optionally the second encrypted random value R2, is transmitted to the shared library 121.

At step 302, the shared library 121 obtains an encrypted integrity hash stored in a special section of the shared library 121. The integrity hash is obtained by applying a hash function to some parts of the code of the shared library 121, and is stored in a dedicated section of the shared library 121 at compilation time. It may then be encrypted at runtime using the GM encryption function upon reception of R1 at step 110.1. The reception of R1 can therefore be considered as an authentication request, that is preliminary to the call of a function of the shared library 121. In the embodiments where neither R1 nor R2 is transmitted at step 301, an authentication request can still be transmitted by the computer program 110.1 at step 301.

Some hash functions are well known and are not further described in the present description. The encrypted integrity hash is noted HP in what follows.

At step 303, the shared library 121 may determine an encrypted value T by applying the XOR operation to the encrypted integrity hash HP and to R1: T=GM_XOR(R1, HP).

In the embodiments where both R1 and R2 are received by the shared library 121 at step 301, step 303 comprises determining an intermediate encrypted value S by applying the XOR operation to R1 and R2, then calculating T by applying the XOR operation to the encrypted integrity hash HP and to the intermediate encrypted value S. The following operations are therefore performed by the shared library 121, for obtaining the encrypted value T:

$$S=GM\_XOR(R1, R2);$$
$$T=GM\_XOR(S, HP).$$

At an optional step 304, T can be modified by applying a bit rotation to T. For example, T can be modified by applying a left shift with a shift value to the bits of T, the shift value being known by the computer program 110.1 and the shared library 121 (it can be predetermined, shared or determined on both sides). For example, the shift value may be equal to the protocol version V, when the preliminary steps of figure 2 are implemented: T= Rotate(T, left shift with V).

In the next steps 305 to 307, the shared library 121 determines an encrypted authentication key D, comprising n+1 encrypted elements D[0..n], n being a predefined integer greater than or equal to 1, each element having the size of the GM public key. The encrypted authentication key D is determined based on the XOR operation applied to at least one shared value that can be obtained by the computer program 110.1, and to an encrypted value set derived from a predetermined value set N, comprising n predetermined values, known by the shared library 121 and by the computer program 110.1.

At step 305, the shared library 121 assigns T to D[0], the first encrypted element of the encrypted authentication key D.

At step 306, the shared library 121 obtains n encrypted elements D[1..n] by encrypting the n elements N[1..n] of the predetermined value set N, using the GM public key: D[1..n]=GM_Encrypt (N[1..n]).

    a. According to some embodiments, each encrypted element D[i]; i varying between 1 and n, is obtained by encrypting the corresponding element N[i], using the GM public key, then XORing the result with the previous encrypted element D[i-1]. For i=1, D[1] is determined by encrypting N[1] and XORing the result with D[0], which is therefore a first shared value among the at least one shared value mentioned above, as it can be obtained to by the computer program 110.1 at step 308 described hereafter).

b. This allows to obfuscate the encrypted elements D [1..n], while checking integrity because D[0] has been calculated based on HP, and prevents a partial decryption of the authentication key, because each encrypted element is determined based on the previous encrypted element. Therefore, according to these embodiments:

$$D[i]= GM\_XOR(GM\_Encrypt (N[1..n]), D[i-1])),$$
initialized with
$$D[1]= GM\_XOR(GM\_Encrypt (N[1]), D[0])).$$

Still alternatively, GM_Encrypt(N[1]) can be XORed with R1 instead of D[0], to obtain D[1]. In that case, R1 is the first shared value that can be obtained to by the computer program 110.1, because it has been determined by the computer program 110.1 at step 300.

At an optional step 307, the encrypted elements are further XORed with HP, which is a second shared value. This allows to perform authentication of the shared library 121 and obfuscating the transmitted data, while checking the integrity of the shared library 121:
D[1..n]=GM_XOR(D[1..n], HP).

If the optional step 307 is performed, then the at least one shared value comprises a first shared value, which is D[0] or R1, and a second shared value, which is HP.

Therefore, the encrypted authentication key D is at least obtained by encrypting the predetermined value set N with the GM public key and by applying a XOR operation to the result and to at least one shared value that can be obtained by the computer program 110.1. D can be therefore be obtained by determining GM_Encrypt (N[1..n]) and:

- by assigning T as D[0]; and/or
- by XORing GM_Encrypt (N[1]) with D[0] or R1 (D[0] and R1 being the first shared value), then XORing GM_Encrypt (N[i]) with D[i-1] to obtain D[i], i varying between 1 and n; and/or
- by further XORing D[1..n] with HP (HP being the second shared value).

At step 308, the encrypted authentication key D is transmitted to the computer program 110.1.

At step 309, the computer program 110.1 may calculate the hash of the shared library 121 then encrypts it with the GM public key to obtain HP. Step 309 is optional and can be performed only in the embodiments where the integrity of the shared library 121 is checked and/or where D has been XORed with HP.

At optional step 310, the computer program 110.1 obtains T by reading D[0] received at step 308. Step 310 is performed in the embodiments where D[0] is included in D.

At optional step 311, which is implemented in embodiments where the bit rotation of step 304 is applied, the computer program 110.1 modifies T by applying the inverse bit rotation: if a left shift with the shift value (which can be the protocol version V) is applied at step 304, then a right shift with the shift value is applied to T by the computer program 110.1 at step 311.

Optional steps 312 to 314 can be performed to check integrity of the shared library 121, before authenticating it. Steps 312 to 314 can be performed when T has been obtained at step 310 (and optionally after the bit rotation of step 311).

At step 312, an encrypted integrity value IV is obtained by the computer program 110.1 by applying the XOR operation to T and R1. In the embodiments where R1 and R2 are transmitted at step 301, step 312 comprises the computation of S=GM_XOR(R1, R2) and the encrypted integrity value IV is obtained by applying the XOR operation to T and S.

It is to be noted that, in the embodiments where the encryption function is different than GM, and is homomorphic to a pair of inverse operations, step 312 consists in applying the operation of the pair that is inverse to the first operation applied by the shared library 121. The same applies to the subsequent steps involving the XOR operation.

At step 313, the encrypted integrity value IV is modified by being XORed with HP:
IV=GM_XOR(IV, HP).

At step 314, the encrypted integrity value IV, as modified at step 313, is decrypted by the computer program 110.1 using the GM private key stored by the computer 100, and the result, noted isValid, is compared with 0.

If isValid==0, then the integrity of the shared library 121 is validly checked, and the method goes on with step 315.

Else, if is Valid differs from 0, then the computer program110.1 can be interrupted, returning that the shared library has been tampered, and the authentication method is interrupted.

An alternative technique for performing integrity check during steps 312 to 314 is described in what follows. This alternative can be implemented in the embodiments where R1 and R2 are transmitted at step 301.

At step 312, an encrypted value R is determined by applying the XOR operation to HP and R1:
R=GM_XOR(HP, R1);

At step 313, the encrypted integrity value is determined by applying the XOR operation to T and R:
IV=GM_XOR(T, R).

At step 314, the encrypted integrity value IV is decrypted using the GM private key to obtain isValid and isValid is compared with the other random value RV2 from which R2 has been derived at step 300. If isValid is equal to RV2, then the integrity of the shared library 121 is validly checked, and the method goes on with step 315. Else, if isValid differs from RV2, then the computer program 110.1 can be interrupted, returning that the shared library has been tampered, and the authentication method is interrupted.

The following steps (from step 315) enable to authenticate the shared library 121 by the computer program 110.1, using D and the at least one shared value.

At optional step 315, which is performed in the embodiments where step 307 is performed by the shared library (XORing the encrypted elements with HP, being the second shared value), each of the encrypted elements D[1..n] is XORed with HP that has been determined at step 309, to obtain a set of intermediate encrypted elements ProvidedData[i], for each index i varying between 1 and n: ProvidedData[i]=GM_XOR(D[i], HP).

In the embodiments where step 307 is not performed by the shared library 121, ProvidedData[i]=D[i] in what follows.

At step 316, each intermediate encrypted element ProvidedData[i] of the set of intermediate encrypted elements is modified by being XORed with the previously modified intermediate encrypted element [i-1] for i greater than 1, or with the first shared value D[0] or R1 for i=1.

At step 317, the set of intermediate encrypted elements ProvidedData[i], as modified after step 316, are decrypted by the computer program 110.1 using the GM private key stored in the computer 100, and a set of decrypted values DecryptedData[i], i varying between 1 and n, is obtained.

At step 318, the computer program 110.1 compares the set of decrypted values DecryptedData[i] with the predefined value set N[1..n].

If the set of decrypted values DecryptedData[i] is identical to the predefined value set N[1..n], then the shared library 121 is validly authenticated by the computer program 110.1 and a secure communication channel is established between the shared library 121 and the computer program 110.1 at step 319, during which the computer program 110.1 can invoke one or several functions of the shared library 121.

If the set of decrypted values DecryptedData[i] is different from the predefined value set N[1..n], then the authentication of the shared library 121 fails and an error is returned by the computer program 110.1. The secure communication channel of step 319 is not established.

Therefore, the invention allows to use an encryption function that is homomorphic for at least one operation, to perform authentication between a shared library and a computer program. In addition, the encryption function and the at least one operation can be used to check the protocol version of the shared library and/or to check integrity of the shared library during the authentication process.

The example embodiments are described in sufficient detail to enable those of ordinary skill in the art to embody and implement the systems and processes herein described. It is important to understand that embodiments can be provided in many alternate forms and should not be construed as limited to the examples set forth herein.

**Claims**

1. A method of authentication between a computer program (110.1) executed on a computer (100) and a shared library (121) implemented in an entity (120), the computer program comprising code instructions with a link to call for at least one function of the shared library, wherein the method comprises the following steps:

   - applying (306), by the entity, an encryption function to a predetermined value set N, comprising at least one element N[i], i being an index varying between 1 and n, n being an integer equal to or greater than 1, wherein the encryption function is homomorphic for at least one operation, including a first operation;
   - applying (306; 307), by the entity, the first operation to at least one encrypted element of the encrypted value set and to at least one shared value to obtain an authentication key D, wherein the at least one shared value can be accessed to by the computer;
   - receiving (308) the authentication key D by the computer;
   - performing (315-318) authentication of the shared library, by the computer, based on the authentication key D;
   - establishing (319) a communication channel between the computer program and the shared library to execute the function called by the link in the computer program, only if the authentication of the shared library is valid.

2. The method according to claim 1, further comprising obtaining (300; 309; 310) the at least one shared value by the computer (100), and wherein performing (315-318) the authentication of the shared library (121) based on the authentication key D comprises:

   - applying (315; 316) one of the at least one operation to at least a part of the authentication key D and to the at least one shared value to obtain a set of intermediate encrypted elements;
   - decrypting (317) the set of intermediate encrypted elements to obtain a set of decrypted values;
   - comparing (318) the set of decrypted values with the predetermined value set to authenticate the shared library;

   wherein the authentication of the shared library is valid if the set of decrypted values is identical with the predetermined value set.

3. The method according to claim 1 or 2, wherein the encryption function is based on a public key associated with the computer and made accessible to the entity (120), the computer further comprising a secret key for decrypting data encrypted with the public key.

4. The method according to one of claims 1 to 3, wherein the encryption function is a Goldwasser-Micali encryption function and wherein the first operation is the XOR operation.

5. The method according to one of the preceding claims, further comprising :

   - generating (300) a random value RV1 by the computer (100) and encrypting the random value RV1 to obtain an encrypted random value R1;
   - transmitting (301) the encrypted random value R1 from the computer to the entity (120); wherein the at least one shared value comprises a first shared value derived from the encrypted random value R1.

6. The method according to claim 5, wherein the entity (120) determines (302) an encrypted integrity hash, wherein the encrypted integrity hash is obtained by applying the encryption function to a hash of the shared library (121), wherein the at least one shared value comprises a second shared value and wherein the second shared value is the encrypted integrity hash.

7. The method according to one of the preceding claims, wherein the authentication key comprises n encrypted elements D[1..n] derived from the encrypted value set and a first element D[0], wherein the first element D[0] is determined (303; 304; 305) by the entity (120) based on an encrypted integrity hash, wherein the encrypted integrity hash is obtained (302) by applying the encryption function to a hash of the shared library (121);
   wherein the method further comprises checking (312-314) integrity of the shared library by the computer (100), based on the first element D[0], and wherein the computer performs (315-318) authentication of the shared library only if the integrity of the shared library is validly checked.

8. The method according to claim 7, wherein the first element D[0] is determined (303; 304; 305) by the entity:

   - by applying (303) the first operation to an encrypted random value R1 received from the computer and to the encrypted integrity hash, to obtain an encrypted value T;
   - by assigning (305) the encrypted value T to the first element D[0].

9. The method according to claim 8, wherein the entity (120) applies (304) a bit rotation by a predetermined value to the encrypted value T before assigning (305) the encrypted value T to the first element D [0], and wherein the computer applies (311) the inverse bit rotation to the first element D[0] upon reception of the authentication key D.

10. The method according to claim 9, wherein the predetermined value is a protocol version V of the shared library (121).

11. The method according to one of the preceding claims, further comprising the following preliminary steps:

    - transmitting (201), from the computer (100) to the entity (120), an encrypted initialization random value Init_R1 obtained by applying (200) the encryption function to an initialization random value;
    - applying (203), by the entity, the encryption function to a protocol version V of the shared library, to obtain an encrypted protocol version V';
    - applying (204) the first operation to the encrypted protocol version V' and to the encrypted initialization random value Init_R1, to obtain another encrypted initialization random value Init_R2;
    - transmitting (205) the other encrypted initialization random value Init_R2 to the computer;
    - checking (206-208) the protocol version of the shared library by the computer based on the received other encrypted initialization random value Init_R2;

    wherein the computer performs authentication of the shared library only if the protocol version of the shared library is validly checked, and wherein the entity applies the encryption function to the predetermined value set N after reception of an authentication request.

12. The method according to claim 11, wherein checking of the protocol version of the shared library (121) by the computer (100) comprises:

    - applying (206) one of the at least one operation to the other encrypted initialization random value Init_R2 and to the encrypted initialization random value Init_R1 to obtain the encrypted protocol version V';
    - decrypting (207) the encrypted protocol version V' to obtain the protocol version V;
    - checking (208) that the protocol version V is a valid protocol version.

**13.** An authentication system (10) comprising a computer (100) configured to execute a computer program (110.1), and an entity (120) implementing a shared library (121) implemented, the computer program comprising code instructions with a link to call for at least one function of the shared library, wherein the entity is configured for:

- applying an encryption function to a predetermined value set N, comprising at least one element N[i], i being an index varying between 1 and n, n being an integer equal to or greater than 1, wherein the encryption function is homomorphic for at least one operation, including a first operation;

- applying the first operation to at least one encrypted element of the encrypted value set and to at least one shared value to obtain an authentication key D, wherein the at least one shared value can be accessed to by the computer;

wherein the computer comprises an interface (103) configured for receiving the authentication key D by the computer, and a processor (101) configured for:

- performing authentication of the shared library based on the authentication key D;

- establishing a communication channel between the computer program and the shared library to execute the function called by the link in the computer program, only if the authentication of the shared library is valid.

[Fig. 1]

[Fig. 2]

[Fig.3]

Europäisches
Patentamt

European
Patent Office

Office européen
des brevets

# EUROPEAN SEARCH REPORT

**Application Number**

EP 24 30 5741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/156602 A1 (GRAB ERIC WILLIAM [US] ET AL) 2 June 2016 (2016-06-02)<br>* paragraph [0016] - paragraph [0020] *<br>* paragraph [0060] *<br>* paragraph [0077] - paragraph [0081] *<br>* paragraph [0102] - paragraph [0104] *<br>----- | 1-13 | INV.<br>G06F21/44<br>H04L9/00 |
| A | US 2004/139341 A1 (YAMAGUCHI KENSAKU [JP] ET AL) 15 July 2004 (2004-07-15)<br>* paragraph [0018] *<br>* paragraph [0084] *<br>* paragraph [0093] *<br>----- | 1-13 | |

**TECHNICAL FIELDS SEARCHED (IPC)**

G06F
H04L

The present search report has been drawn up for all claims

| Place of search | Date of completion of the search | Examiner |
|---|---|---|
| The Hague | 31 October 2024 | Lamelas Polo, Yvan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 4 650 997 A1

## ANNEX TO THE EUROPEAN SEARCH REPORT
## ON EUROPEAN PATENT APPLICATION NO.

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2024

| Patent document cited in search report | Publication date | Patent family member(s) | Publication date |
|---|---|---|---|
| US 2016156602 A1 | 02-06-2016 | US 2013054960 A1 | 28-02-2013 |
| | | US 2014351574 A1 | 27-11-2014 |
| | | US 2016156602 A1 | 02-06-2016 |
| | | US 2017374039 A1 | 28-12-2017 |
| | | US 2019319935 A1 | 17-10-2019 |
| | | US 2022263807 A1 | 18-08-2022 |
| | | US 2024356903 A1 | 24-10-2024 |
| | | WO 2013032515 A2 | 07-03-2013 |
| US 2004139341 A1 | 15-07-2004 | JP 4115759 B2 | 09-07-2008 |
| | | JP 2004038394 A | 05-02-2004 |
| | | US 2004139341 A1 | 15-07-2004 |
| | | US 2007250720 A1 | 25-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. GOLDWASSER** ; **S. MICALI**. Probabilistic encryption. *J. Comput. Syst Sci*, 1984, vol. 28 (2)